# FASCICULE DE BREVET EUROPEEN

(11) **EP 2 616 255 B1**
(45) Date de publication et mention de la délivrance du brevet: **29.04.2015**
(21) Numéro de dépôt: 11773080.4
(22) Date de dépôt: 14.09.2011
(51) Int. Cl.: B60C 11/14, B60C 11/00

(54) **PNEUMATIQUE ET MOULE COMPRENANT UN PASSAGE FLUIDIQUE**
REIFEN AND FORM MIT EINEM FLUIDPASSAGE
TIRE AND MOULD COMPRISING A FLUID PASSAGE

(30) Priorité: 14.09.2010 FR 1057324
(43) Date de publication de la demande: 24.07.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MERINO LOPEZ, José, F-63040 Clermont-Ferrand Cedex 9 (FR); VASSEUR, Didier, F-63040 Clermont-Ferrand Cedex 9 (FR); CUSCITO, Olivia, F-63040 Clermont-Ferrand Cedex 9 (FR); PETITJEAN, Sylvain, F-63040 Clermont-Ferrand Cedex 9 (FR)
(74) Mandataire: Demaure, Pierre-Yves
(86) Numéro de dépôt international: PCT/FR2011/052096
(87) Numéro de publication internationale: WO 2012/035256

(56) Documents cités:
- EP-A1- 0 576 130
- EP-A1- 2 039 531
- JP-A- 6 008 708

## Description

La présente invention concerne un pneumatique et un moule de vulcanisation. On connaît de l'état de la technique un pneumatique comportant une bande de roulement munie d'une couche de roulage comprenant une gomme classique. Cette couche de roulage est destinée à être en contact avec le sol lors du roulage du pneumatique sur le sol.

Plus particulièrement, la couche de roulage comprend différentes nappes de gomme adaptées au roulement du pneumatique sur le sol. Ces nappes présentent des propriétés de résistance à l'usure élevée.

Dans certains cas, afin de limiter le bruit de roulement du pneumatique sur le sol, la bande de roulement est munie également d'une couche comprenant un matériau alvéolaire. Le matériau alvéolaire comprend, par exemple, une mousse, c'est-à-dire un matériau dans lequel des bulles de gaz forment des alvéoles.

Le matériau alvéolaire s'usant plus rapidement que la gomme classique, on a proposé de disposer la couche comprenant le matériau alvéolaire radialement vers l'intérieur par rapport à la couche de roulage, ce matériau alvéolaire formant ainsi une sous-couche de la bande de roulement.

La sous-couche est donc généralement interposée radialement entre la couche de roulage et une armature munie de renforts métalliques ou textiles noyés dans des masses de gomme.

Lors de la vulcanisation du pneumatique, une réaction chimique génère des bulles de gaz formant les alvéoles du matériau alvéolaire. Toutefois, le gaz formé a parfois tendance à s'accumuler dans des zones formant des alvéoles d'accumulation de relativement grande taille. Lorsque ces alvéoles d'accumulation sont trop grandes ou lorsqu'elles sont situées à l'interface entre la couche de roulage et la sous-couche, elles provoquent, sous l'effet de leur pression, le décollement de la couche de roulage par rapport à la sous-couche. Dans ce cas, le pneumatique ne peut pas être vendu car sa fiabilité n'est pas satisfaisante.

Le document EP 0 576 130-A1 montre un pneumatique selon le préambule de la revendication 1.

L'invention a pour but d'optimiser la fiabilité d'un pneumatique muni d'une sous-couche de matériau alvéolaire.

A cet effet, l'invention a pour objet un pneumatique comprenant une bande de roulement comprenant une couche de roulage destinée à être en contact avec le sol lors du roulage du pneumatique sur le sol et une sous-couche, comprenant un matériau alvéolaire, située radialement de façon interne par rapport à la couche de roulage, la bande de roulement comprenant au moins un passage fluidique entre la sous-couche et l'air environnant le pneumatique, le passage fluidique comprenant au moins un élément choisi parmi un sillon et une entaille, ménagé dans la couche de roulage et prolongé par au moins un puits de prolongement radial de l'élément, ménagé entre le sillon et/ou l'entaille et la sous-couche, chaque puits formant une partie localisée du passage fluidique.

Grâce à l'invention, les risques de décollement de la couche de roulage par rapport à la sous-couche sont limités, voire supprimés. En effet, le passage fluidique permet d'évacuer, à l'extérieur du pneumatique, le gaz sous pression qui aurait tendance à former des alvéoles d'accumulation de taille importante lors de la cuisson du pneumatique. Les alvéoles de taille trop importante sont ainsi évitées.

Chaque puits forme une partie discrète de passage, évitant une partie de passage continue sur toute la longueur de l'élément qu'il prolonge, le sillon ou l'entaille. Le puits prolonge donc uniquement une partie de la longueur du sillon ou de l'entaille. Ainsi, les puits de passage permettent de réduire le risque de séparation entre la couche de roulage et la sous-couche l'une par rapport à l'autre contrairement à un passage continu sur toute la longueur de l'élément qui favoriserait la séparation de la couche et de la sous-couche l'une par rapport à l'autre.

On utilise les sillons et les entailles de la couche de roulage pour évacuer l'air sous pression des bulles d'accumulation. Les sillons sont sensiblement circonférentiels et s'étendent autour du pneumatique sensiblement parallèlement à la direction circonférentielle du pneumatique. En variante, les sillons s'étendent autour du pneumatique selon un trajet non parallèle à la direction circonférentielle du pneumatique.

Le passage fluidique est constitué, d'une part, par le sillon et/ou l'entaille qui débouche dans l'air environnant le pneumatique et d'autre part, par le puits débouchant dans la sous-couche alvéolaire. Le puits relie ainsi fluidiquement le sillon et/ou l'entaille et la sous-couche alvéolaire.

Selon des caractéristiques optionnelles du pneumatique selon l'invention:
- Le passage fluidique est ménagé dans la couche de roulage. En variante, le passage fluidique est ménagé dans une autre couche du pneumatique, par exemple une masse de gomme formant une couche du flanc ou de l'épaule du pneumatique.
- Le passage s'étend radialement entre une surface externe de la bande de roulement et la sous-couche. De préférence, le passage s'étend selon un trajet sensiblement rectiligne. En variante, le passage s'étend selon un trajet sensiblement curviligne.

De préférence, le taux de vide dans le matériau alvéolaire est compris entre 10% et 60% en volume, plus préférentiellement entre 25% et 50%, le taux de vide T étant défini par T = Vg / Vm, avec Vg = volume total des alvéoles du matériau alvéolaire, et Vm = volume total de la masse de matériau alvéolaire (comprenant les alvéoles).

L'invention a également pour objet un moule de vulcanisation d'un pneumatique tel que défini ci-dessus, le moule comprenant un élément de moulage du passage fluidique comprenant un élément de moulage du sillon et/ou de l'entaille dans la couche de roulage et prolongé radialement par au moins un élément de moulage du puits.

Dans un autre mode de réalisation, le moule comprend un élément de moulage du passage fluidique comprenant une lamelle de moulage crénelée.

L'invention sera mieux comprise à la lecture de la description qui va suivre, donnée uniquement à titre d'exemple non limitatif et faite en se référant aux dessins dans lesquels :
- la figure 1 est une vue schématique en coupe axiale d'une partie d'une bande de roulement d'un pneumatique selon un mode non revendiqué;
- la figure 2 est une vue schématique en perspective d'une matrice d'un moule de vulcanisation du pneumatique de la figure 1 selon un mode non revendiqué;
- les figures 3 et 4 sont des vues analogues aux vues 1 et 2 d'un pneumatique et d'un moule selon un premier mode de réalisation de l'invention;
- les figures 5 et 6 sont des vues analogues aux vues 1 et 2 d'un pneumatique et d'un moule selon un deuxième mode de réalisation de l'invention;
- les figures 7 et 8 sont des vues analogues aux vues 1 et 2 d'un pneumatique et d'un moule selon un troisième mode de réalisation de l'invention.

Sur les figures, on a représenté des axes X, Y, Z orthogonaux entre eux correspondant aux orientations habituelles radiale (X), axiale (Y) et circonférentielle d'un pneumatique.

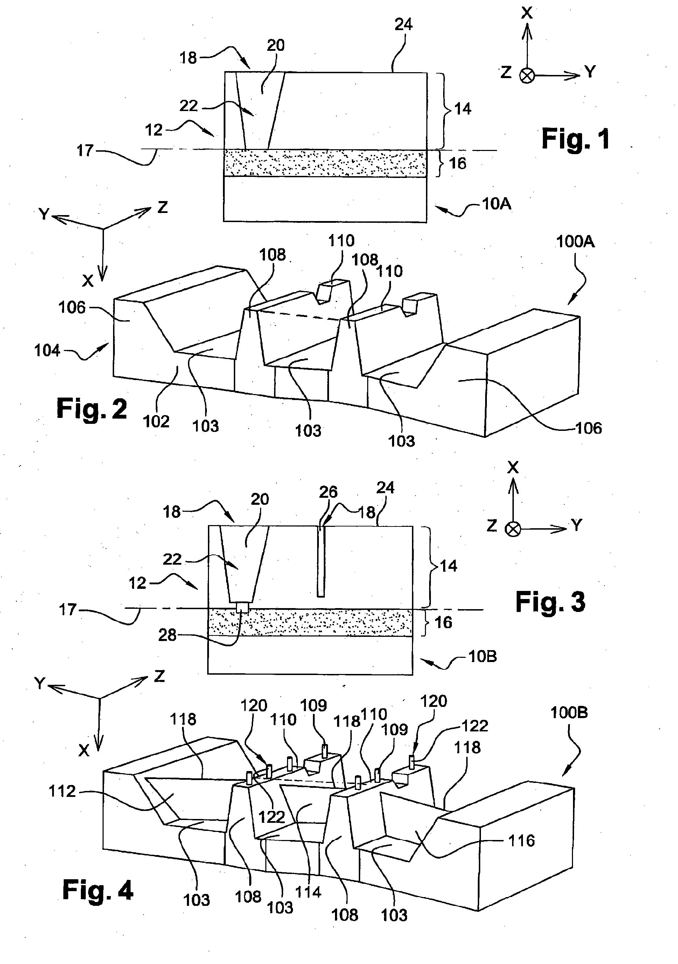

On a représenté sur la figure 1 un pneumatique selon un mode non revendiqué et désigné par la référence générale 10A.

Le pneumatique 10A comprend une bande de roulement 12.

La bande de roulement 12 comprend, entre autres, une couche 14 de roulage destinée à être en contact avec le sol lors du roulage du pneumatique 10A sur le sol. La bande 12 comprend également une sous-couche 16 située radialement de façon interne par rapport à la couche de roulage 14. La sous-couche 16 comprend un matériau alvéolaire, ici une mousse. Sur la figure 1, la cote d'extrémité radialement externe de la sous-couche 16 est délimitée par une ligne 17 en pointillés.

De préférence, le taux de vide dans le matériau alvéolaire est compris entre 10% et 60% en volume, plus préférentiellement entre 25% et 50%, le taux de vide T étant défini par T = Vg / Vm avec Vg = volume total des alvéoles du matériau alvéolaire, et Vm = volume total de la masse de matériau alvéolaire (comprenant les alvéoles).

La bande de roulement 12, ici la couche de roulage 14, comprend des sculptures 18. Les sculptures 18 comprennent un sillon 20 ménagé dans la couche de roulage. En l'espèce, le sillon 20 s'étend circonférentiellement autour du pneumatique 10A.

La bande de roulement 12 comprend également au moins un passage fluidique 22 entre la sous-couche 16 et l'air environnant le pneumatique 10A. Ici, le passage fluidique 22 est ménagé dans la couche de roulage 14. Le passage 22 s'étend radialement entre une surface externe 24 de la bande de roulement 12 et la sous-couche 16. Dans ce mode de réalisation non-revendiqué, le passage 22 comprend, ici est constitué par, le sillon 20. Le sillon 20 débouche d'une part dans l'air environnant le pneumatique 10A et d'autre part dans la sous-couche 16.

On a représenté sur la figure 2 une matrice de moulage d'un moule selon un mode de réalisation non-revendiqué et désignée par la référence générale 100A.

La matrice 100A comprend une base 102 portant des éléments 104 de moulage de la bande de roulement 12. La matrice 100A comprend une surface 103 de moulage de la surface externe 24. Les éléments 104 comprennent des éléments 106 de moulage des épaules du pneumatique 12 ainsi que des éléments 108 de moulage de deux sillons circonférentiels 20. Les éléments 108 comportent des extrémités radiales 110 délimitant le fond de chaque sillon circonférentiel 20.

Comme illustré sur la figure 2, les éléments 108 s'étendent radialement depuis la surface 103 sur une distance supérieure à la distance séparant la surface 24 de la cote 17 de la sous-couche 16. En d'autres termes, la cote d'extrémité radiale de la sous-couche 16 est située radialement de façon externe par rapport aux extrémités radiales 110 des éléments 108 de sorte que chaque élément 108 permet le moulage du passage fluidique 22 dans la couche de roulage 14.

On a représenté sur les figures 3 et 4 un pneumatique 10B et une matrice 100B d'un moule selon un premier mode de réalisation. Les éléments analogues à ceux représentés dans le mode de réalisation précédent sont désignés par des références identiques.

A la différence du pneumatique 10A, la bande de roulement 12 comprend une entaille 26.

En outre, le passage fluidique 22 comprend, d'une part, le sillon circonférentiel 20 débouchant sur l'air environnant le pneumatique 10B et, d'autre part, un puits 28 de prolongement radial du sillon 20 débouchant dans la sous-couche 16. Le puits 28 présente une forme générale de révolution, en l'espèce cylindrique.

A la différence du pneumatique 10A, le sillon 20 ne débouche pas directement dans la sous-couche 16, mais par l'intermédiaire du puits 28. Chaque puits 28 de prolongement forme une partie localisée de passage fluidique entre l'élément de passage qu'il prolonge, ici le sillon 20, et la sous-couche 16. En l'espèce, chaque puits 28 prolonge radialement uniquement une partie de la longueur du sillon 20.

A la différence de la matrice 100A, la cote d'extrémité radiale de la sous-couche 16 est située radialement de façon interne par rapport aux extrémités radiales 110 des éléments 108 de moulage des deux sillons circonférentiels 20.

La matrice 100B comprend, en plus des éléments de la matrice 100A, des lamelles 112-116 de moulage des entailles 26. Chaque lamelle 112-116 comprend un bord libre 118 radialement interne. La cote d'extrémité radiale de la sous-couche 16 est située radialement de façon interne par rapport aux bords libres 118 des lamelles 112-116.

La matrice 100B comprend également des éléments de moulage 120 prolongeant les éléments de moulage 108 et présentant une extrémité radialement interne 109. En l'espèce, les éléments 120 comprennent des doigts 122. Chaque doigt 122 présente une forme générale de révolution, en l'espèce cylindrique. Les éléments 108, 120 s'étendent radialement depuis la surface 103 sur une distance supérieure à la distance séparant la surface 24 de la cote 17 de la sous-couche 16. En d'autres termes, la cote d'extrémité radiale de la sous-couche 16 est située radialement de façon externe par rapport aux extrémités radiales 109 des éléments 120 de sorte que chaque élément 108, 120 permet le moulage du passage fluidique 22 dans la couche de roulage 14.

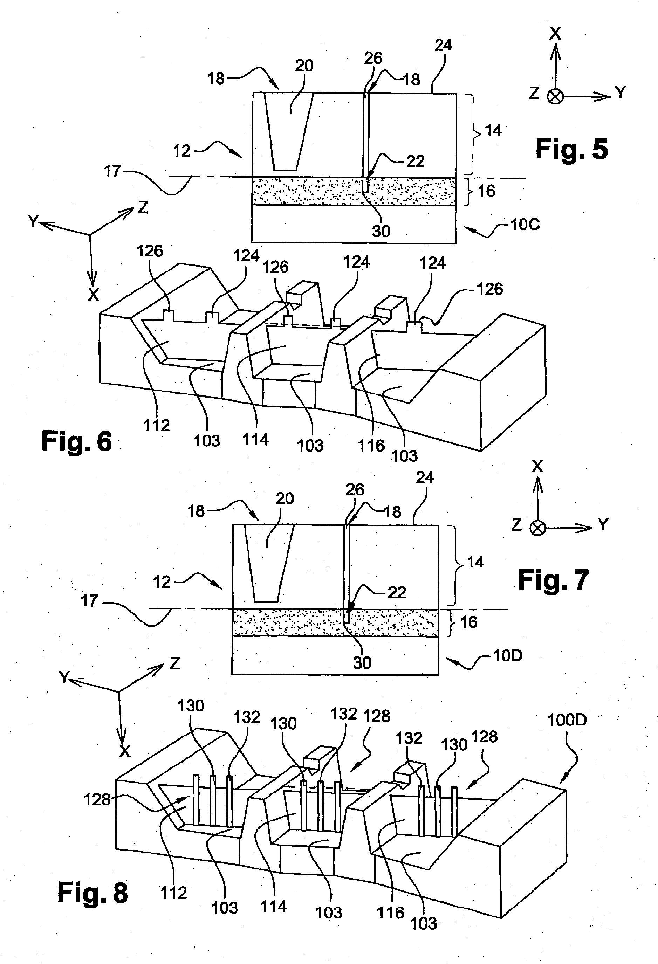

On a représenté sur les figures 5 et 6 un pneumatique 10C et une matrice 100C d'un moule selon un deuxième mode de réalisation. Les éléments analogues à ceux représentés dans les modes de réalisation précédents sont désignés par des références identiques.

A la différence du pneumatique 10B, le passage fluidique 22 comprend, d'une part, l'entaille 26 débouchant sur l'air environnant le pneumatique 10C et, d'autre part, un puits 30 de prolongement radial de l'entaille 26 débouchant dans la sous-couche 16. Le puits 30 présente une forme générale parallélépipédique. Chaque puits 30 de prolongement forme une partie localisée de passage fluidique entre l'élément de passage qu'il prolonge, ici l'entaille 26, et la sous-couche 16. En l'espèce, chaque puits 30 prolonge radialement uniquement une partie de la longueur de l'entaille 26. Le passage fluidique 22 débouche d'une part sur l'air environnant le pneumatique 10C et, d'autre part, dans la sous-couche 16.

A la différence de la matrice du moule 100B, au moins une lamelle 112-116, ici chaque lamelle 112-116, présente une forme crénelée. En l'espèce, chaque lamelle 112-116 comprend des saillies 124 présentant des bords libres radiaux 126. Les saillies 124 s'étendent radialement depuis la surface 103 sur une distance supérieure à la distance séparant la surface 24 de la cote 17 de la sous-couche 16. En d'autres termes, les saillies 124 s'étendent radialement de façon interne de sorte que la cote d'extrémité radiale de la sous-couche 16 est située radialement de façon externe par rapport aux bords libres 126 de chaque saillie 124.

On a représenté sur les figures 7 et 8 un pneumatique 10D et une matrice 100D d'un moule selon un troisième mode de réalisation. Les éléments analogues à ceux représentés dans les modes de réalisation précédents sont désignés par des références identiques.

A la différence du pneumatique 10B, le passage fluidique 22 comprend, d'une part, l'entaille 26 débouchant sur l'air environnant le pneumatique 10C et, d'autre part, un puits 30 de prolongement radial de l'entaille 26 débouchant dans la sous-couche 16. Le puits 30 présente une forme générale de révolution, en l'espèce cylindrique. Chaque puits 30 de prolongement forme une partie localisée de passage fluidique entre l'élément de passage qu'il prolonge, ici l'entaille 26, et la sous-couche 16. En l'espèce, chaque puits 30 prolonge radialement uniquement une partie de la longueur de l'entaille 26.

A la différence de la matrice du moule 100B, au moins une lamelle 112-116, ici chaque lamelle 112-116, comprend des éléments de moulage 128 des puits 30. Chaque élément 128 comprend un doigt 130 présentant une extrémité libre 132 et s'étendant radialement depuis la surface 103 sur une distance supérieure à la distance séparant la surface 24 de la cote 17 de la sous-couche 16. En d'autres termes, la cote d'extrémité radiale de la sous-couche 16 est située radialement de façon externe par rapport aux extrémités libres 132 des doigts 130.

L'invention ne se limite pas aux modes de réalisation précédemment décrits. En effet, les caractéristiques des pneumatiques et des moules des précédents modes de réalisation pourront être indépendamment combinées les unes avec les autres dès lors qu'elles sont compatibles sans sortir du cadre des revendications ci-jointes. Entre autres, on pourra combiner les caractéristiques des pneumatiques et moules illustrés sur les figures 3, 4 d'une part, et 5, 6 ou 7, 8 d'autre part sans sortir du cadre des revendications ci-jointes.

## Revendications

1. Pneumatique (10A; 10B; 10C; 10D) comprenant une bande de roulement (12) comprenant une couche de roulage (14), destinée à être en contact avec le sol lors du roulage du pneumatique (10A; 10B; 10C; 10D) sur le sol, et une sous-couche (16), comprenant un matériau alvéolaire, située radialement de façon interne par rapport à la couche de roulage (14), la bande de roulement (12) comprenant au moins un passage fluidique (22) entre la sous-couche (16) et l'air environnant le pneumatique (10A; 10B; 10C; 10D), **caractérisé en ce que** le passage fluidique (22) comprenant au moins un élément choisi parmi un sillon (20) et une entaille (26), ménagé dans la couche de roulage (14) et prolongé par au moins un puits (28, 30) de prolongement radial de l'élément, ménagé entre le sillon (20) et/ou l'entaille (26) et la sous-couche (16), chaque puits (28, 30) formant une partie localisée du passage fluidique (22).

2. Pneumatique (10A; 10B; 10C; 10D) selon la revendication 1, dans lequel le passage fluidique (22) est ménagé dans la couche de roulage (14).

3. Pneumatique (10A; 10B; 10C; 10D) selon l'une quelconque des revendications précédentes, dans lequel le passage (22) s'étend radialement entre une surface externe (24) de la bande de roulement et la sous-couche (16).

4. Pneumatique selon l'une quelconque des revendications précédentes, dans lequel le taux de vide dans le matériau alvéolaire est compris entre 10% et 60% en volume, plus préférentiellement entre 25% et 50%, le taux de vide T étant défini par T = Vg / Vm avec Vg = volume total des alvéoles du matériau alvéolaire et Vm = volume total de la masse de matériau alvéolaire (comprenant les alvéoles).

5. Moule (100A; 100B; 100C; 100D) de vulcanisation d'un pneumatique, **caractérisé en ce qu'**il est apte à vulcaniser un pneumatique (10A; 10B; 10C; 10D) selon l'une quelconque des revendications précédentes, et **en ce qu'**il comprend un élément (108; 120; 124; 128) de moulage du passage fluidique (22) comprenant un élément de moulage (108; 124) du sillon (20) et/ou de l'entaille (26) dans la couche de roulage (14) et prolongé radialement par au moins un élément de moulage (120; 128) du puits (28, 30).

## Patentansprüche

1. Reifen (10A; 10B; 10C; 10D), der einen Laufstreifen (12) umfasst, der eine Lauffläche (14) für den Kontakt mit dem Boden während des Rollens des Reifens (10A; 10B; 10C; 10D) auf dem Boden und eine zelluläres Material umfassende Unterlage (16), die radial bezüglich der Lauffläche (14) innen angeordnet ist, umfasst, wobei der Laufstreifen (12) mindestens einen Fluidkanal (22) zwischen der Unterlage (16) und der den Reifen (10A; 10B; 10C; 10D) umgebenden Luft umfasst, **dadurch gekennzeichnet, dass** der Fluidkanal (22) mindestens ein unter einer Rille (20) und einem Einschnitt (26) ausgewähltes Element umfasst, das in der Lauffläche (14) ausgebildet ist und durch mindestens eine als radiale Verlängerung des Elements dienende Vertiefung (28, 30), die zwischen der Rille (20) und/oder dem Einschnitt (26) und der Unterlage (16) angeordnet ist, verlängert ist, wobei jede Vertiefung (28, 30) einen lokalisierten Teil des Fluidkanals (22) bildet.

2. Reifen (10A; 10B; 10C; 10D) nach Anspruch 1, wobei der Fluidkanal (22) in der Lauffläche (14) ausgebildet ist.

3. Reifen (10A; 10B; 10C; 10D) nach einem der vorhergehenden Ansprüche, wobei sich der Kanal (22) radial zwischen einer äußeren Fläche (24) des Laufstreifens und der Unterlage (16) erstreckt.

4. Reifen nach einem der vorhergehenden Ansprüche, wobei der Lückengrad in dem zellulären Material zwischen 10 und 60 Vol.-%, stärker bevorzugt zwischen 25 und 50 Vol.-%, liegt, wobei der Lückengrad T durch T = Vg / Vm definiert ist, wobei Vg = Gesamtvolumen der Zellen des zellulären Materials und Vm = Gesamtvolumen der Masse des zellulären Materials (einschließlich der Zellen).

5. Reifenvulkanisierungsform (100A; 100B; 100C; 100D), **dadurch gekennzeichnet, dass** sie zur Vulkanisierung eines Reifens (10A; 10B; 10C; 10D) nach einem der vorhergehenden Ansprüche geeignet ist und dass sie ein Element (108; 120; 124; 128) zur Formung des Fluidkanals (22) umfasst, das ein Element (108; 124) zur Formung der Rille (20) und/oder des Einschnitts (26) in der Lauffläche (14) umfasst und durch mindestens ein Element (120; 128) zur Formung der Vertiefung (28; 30) radial verlängert ist.

## Claims

1. Tyre (10A; 10B; 10C; 10D) comprising a tread (12) including a running surface (14), intended to come into contact with the ground when the tyre (10A; 10B; 10C; 10D) rolls on the ground, and a sublayer (16), comprising a cellular material, located radially inwards from the running surface (14), the tread (12) comprising at least one fluid passage (22) between the sublayer (16) and the air surrounding the tyre (10A; 10B; 10C; 10D), **characterized in that** the fluid passage (22) comprises at least one element chosen from a groove (20) and a cut (26), formed in the running surface (14) and extended by at least one well (28, 30) acting as a radial extension of the element, formed between the groove (20) and/or the cut (26) and the sublayer (16), each well (28, 30) forming a localized part of the fluid passage (22).

2. Tyre (10A; 10B; 10C; 10D) according to Claim 1, in which the fluid passage (22) is formed in the running surface (14).

3. Tyre (10A; 10B; 10C; 10D) according to either of the preceding claims, in which the passage (22) extends radially between an outer surface (24) of the tread and the sublayer (16).

4. Tyre according to any of the preceding claims, in which the void fraction in the cellular material is in the range from 10% to 60% by volume, or more preferably from 25% to 50%, the void fraction T being defined by T = Vg / Vm, where Vg is the total volume of cells in the cellular material, and Vm is the total volume of the body of cellular material (including the cells).

5. Curing mould (100A; 100B; 100C; 100D) for a tyre, **characterized in that** it is adapted to cure a tyre (10A; 10B; 10C; 10D) according to any of the preceding claims, and **in that** it comprises an element (108; 120; 124; 128) for moulding the fluid passage (22), including an element (108; 124) for moulding the groove (20) and/or the cut (26) in the running surface (14), extended radially by at least one element (120; 128) for moulding the well (28, 30).
